# FASCICULE DE BREVET EUROPEEN

(11) **EP 0 943 418 B1**
(45) Date de publication et mention de la délivrance du brevet: **10.09.2003**
(21) Numéro de dépôt: 99870040.5
(22) Date de dépôt: 10.03.1999
(51) Int. Cl.: B29C 65/18, B29C 65/30, B29C 65/02, E04D 5/14

(54) **Procédé de fixation non perforant de membranes étanches à une structure sous-jacente et outillage utilisé pour la mise en oeuvre du procédé**
Verfahren zur nicht perforierenden Befestigung von Dichtungsverkleidungen und zum Durchführen des Verfahrens geeignetes Werkzeug
Non-piercing fastening method of sealing membranes to a substructure and tool used for this method

(30) Priorité: 18.03.1998 BE 9800213
(43) Date de publication de la demande: 22.09.1999
(73) Titulaire: Prelasti S.A., 1300 Wavre (BE)
(72) Inventeur: Madonini, Nino, 20123 Milano (IT); Payen, Jean-Luc, 6150 Anderlues (BE)
(74) Mandataire: Overath, Philippe

(56) Documents cités:
- EP-A- 0 421 813
- EP-A- 0 442 810
- EP-A- 0 509 591
- EP-A- 0 549 913
- WO-A-96/31670
- DE-A- 2 433 669
- DE-A- 19 634 453
- DE-U- 9 301 252
- FR-A- 1 559 627
- US-A- 5 415 511

## Description

La présente invention concerne un procédé de fixation non perforant de membranes d'imperméabilisation à une structure sous-jacente par l'intermédiaire d'éléments de liaison préalablement fixés sur la structure sous-jacente ainsi que l'outillage de thermosoudure correspondant pour relier localement les éléments de fixation avec la membrane. Un tel procédé/outillage est décrit dans le document WO-A-96/31670.

Parmi les systèmes de pose de couches ou membranes d'imperméabilisation sur les couvertures planes, il est souvent fait usage de systèmes de fixation mécanique.

Dans le domaine de la fixation mécanique, la tendance est de faire la distinction entre la pose de membranes en rouleau et la pose de membranes préfabriquées, car les techniques mises en oeuvre lors de la réalisation du revêtement sont très différentes dans ces deux cas.

La présente invention se rapporte essentiellement à la pose de grandes surfaces à l'aide de membranes préfabriquées.

Pour la pose de ces membranes, les étapes de travail généralement prévues sont les suivantes :
- Fixation, à l'aide de vis, sur la surface à imperméabiliser, d'éléments linéaires de liaison, régulièrement espacés ou d'éléments individuels disposés selon un schéma de conception qui a été traduit en un plan de pose détaillé.
- Pose de la membrane préfabriquée sur toute la surface équipée d'éléments de liaison ou sur une partie seulement.
- Ancrage de la membrane aux éléments de liaison fixés lors de la première étape de travail sur la surface ou structure sous-jacente.

Cette dernière opération reste la plus critique et a fait l'objet à ce jour de nombreuses études et de brevets qui ont conduit à un certain nombre de solutions, présentant cependant toutes un point commun : l'opération s'effectue à partir de l'extérieur de la membrane sur ses points d'ancrage situés en dessous de ladite membrane.

C'est le cas en effet pour les systèmes de fixation purement mécaniques avec capuchon vissé ou encliqueté.

C'est également le cas pour les systèmes de fixation mécanique par thermosoudage des éléments à relier.

Les résultats sont plus ou moins satisfaisants, car dans le premier cas, le coût est élevé et la charge de rétention par unité de fixation est faible, et dans le deuxième cas, l'incertitude concernant les conditions réelles dans lesquelles la soudure a été réalisée, laisse toujours des doutes quant à la fiabilité du raccord.

D'autre part, pour ce qui concerne les critères de base et les prestations auxquels un système de fixation par points doit répondre, il convient de se rappeler:
- qu'un système de fixation par points peut changer la densité (N°/m²) des ancrages sur la même couverture par zone. C'est à dire que le nombre des points de fixation pour chaque zone de la couverture est calculé pour résister uniformément à l'arrachement sous l'effet du vent à partir de valeurs précises sur les dépressions localisées causées par l'action dynamique du vent; à cette fin, puisque l'action du vent dépend de la hauteur du bâtiment, de son exposition et de son orientation par rapport aux vents dominants, et de la zone climatique, il est indispensable de recourir à des données statistiques sur la vitesse de base du vent pour la zone climatique dans laquelle le bâtiment est inséré.
- qu'un système de fixation par points peut être amortissant ; c'est-à-dire qu'il est possible de mettre au point un système capable d'atténuer les effets des secousses dues aux dépressions du vent, tout en absorbant de manière efficace les vibrations induites par les bouffées de vent. Il est bien connu que lesdites contraintes, si elles ne sont pas atténuées, entraînent avec le temps des affaissements ou des dévissages des vis de fixation sur le support.

Un système élastique d'amortissement peut être obtenu par la compression sur la membrane, dans une zone annulaire autour du centre de fixation, sous la forme d'un effet de précharge d'un des composants de la fixation. C'est le cas du système dans lequel un ressort noyé dans la masse en caoutchouc du chapeau est déformé et calé sur les noyaux en Nylon qui ont été fixés au préalable au sous-sol.

Dans ce cas, les membranes d'imperméabilisation sont préfabriquées sous forme de grandes surfaces et fixé sur la structure sous-jacente par l'intermédiaire d'éléments de liaison comprenant un noyau élastiques, sous forme de capuchon plastique qui est habituellement fixé à la structure sous-jacent par des vis. Entre le capuchon et la structure sous-jacente on interpose avantageusement un disque en une matière et/ou une élasticité similaire à la membrane. Ce disque possède un diamètre plus grand que le diamètre du capuchon de façon à présenter une surface annulaire capable d'être relié avec la membrane étanche superposé.

Un tel système de fixation est connu par le document US-4.712.348, dans lequel il est décrit que la membrane d'étanchéité est relié avec une pièce intermédiaire telle qu'une semelle flexible qui est à son tour fixé dans son centre de façon rigide au sous-sol. L'exemple de réalisation précise que la liaison entre la membrane et la semelle flexible est effectué à l'aide d'adhésif mais il est également connu que cette liaison peut être réalisé à l'aide de soudure thermique ainsi que cela ressort de la lecture du document US-3.671.371 dans lequel la membrane est reliée à la sous-structure à l'aide d'une thermo-soudure entre la membrane et des éléments thermosoudable fixés à la sous-structure.

D'autres moyens de fixation de la membrane sont également décrit et illustrés dans les documents représentant l'art antérieure EP 0 549 913 et EP 0 442 810.

Dans le document EP 0 549 913 la membrane est directement liée au capuchon rigide de fixation à la sous-structure, tandis que dans le document EP 0 442 810, la membrane est reliée avec une plaque souple qui sert d'intermédiaire entre le capuchon rigide et la membrane.

Ainsi, il est également décrit dans le document EP-0.344.523 que l'avantage d'une fixation de la membrane à l'aide d'une pièce intermédiaire flexible réside dans le fait que, en cas de soulèvement de la membrane par l'effet de coups de vent, la liaison entre la membrane et le moyen de fixation n'est plus sollicité en arrachement mais principalement en cisaillement.

En effet les contraintes provoqués par les forces d'arrachements du vent, dans les soudures faites directement sur des plaquettes rigides ou non, sont beaucoup plus dangereuses par ce que les liaisons travaillent toujours sous l'effet de pelage Par contre, les contraintes obtenues par les forces de cisaillement sont mieux réparties et l'élasticité des pièces intermédiaires offre en plus un amortissement aux chocs et aux vibrations.

En résumé, les objectifs visés par la présente invention sont les suivants :
- fixation de la membrane par points individuels, c'est-à-dire à l'aide d'un nombre suffisant d'éléments de fixation, calculé à l'avance, sans perforation de la membrane;
- fixation de la membrane par des soudures qui travaillent en cisaillement, atténuant les pointes de contrainte mécanique dus aux coups de vent et atténuant des vibrations transmises aux vis d'ancrage;
- assemblage thermique noyau/membrane de qualité constante par l'intermédiaire d'un outillage auto-agrafant.

Les caractéristiques essentielles de l'invention sont décrits en détails dans les revendications indépendantes annexées.

Des mises-en-oeuvres particulières sont décrites dans les revendications dépendantes.

La présente invention réunit tous les conditions décrits ci-dessus en améliorant la qualité, l'efficacité et surtout la fiabilité de la liaison entre la membrane et les point de fixations au sous-sol, grâce à une technique et un procédé de thermosoudure rendue possible par l'accouplement du noyau de fixation et d'un outillage thermique autoserrant.

L'invention sera décrit plus particulièrement à l'aide d'un exemple de réalisation avec référence aux dessins annexés dans lesquels:
la figure 1 : est une vue en coupe transversale éclatée d'un point de fixation sur une structure sous-jacente.
la figure 2 : est une vue semblable après fixation sur la structure et après pose de la membrane,
les figures 3 et 4 : sont respectivement une vue en plan et une vue en coupe selon la ligne AA d'un capuchon de fixation selon l'invention;
la figure 5 : est une vue en coupe de l'appareil de soudure en position de repos;
les figures 6a et 6b : sont des figures montrant le fonctionnement du mécanisme d'agrafage de l'appareil de soudure,
les figures 7 et 8 : sont des vues en coupe de l'appareil de soudure respectivement en position "chauffe" et "refroidissement".

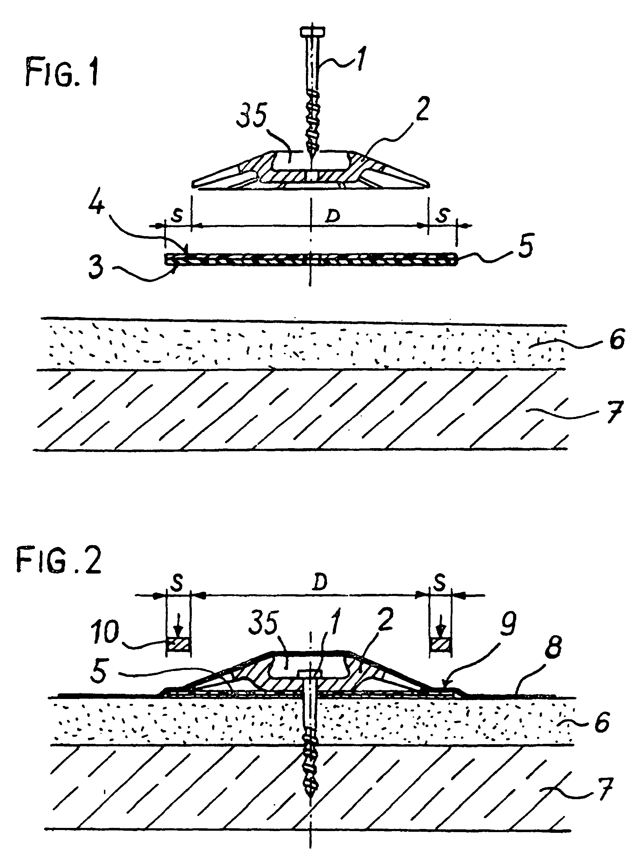

Comme montrée aux figures 1 et 2 la fixation est réalisée à l'aide d'une vis 1, un élément de fixation, tel qu'un capuchon 2 avec un diamètre D et un élément de liaison 5. L'élément de liaison 5 est de préférence composé d'une semelle 3 en forme de rondelle qui dépasse le diamètre extérieur D du capuchon 2 d'une distance S formant ainsi une surface annulaire. La semelle 5 est réalisé en une matière similaire de celle de la membrane étanche et est généralement recouverte sur le côté supérieur d'une couche thermofusible 4 tel que le polyéthylène ou une autre matière plastique compatible avec la nature des caoutchouc utilisés (EPDM) capable de réaliser une bonne adhésion. La couche 4 peut également être réalisé en caoutchouc vulcanisable compatible avec la nature de la membrane.

Le capuchon 2 est fixé par l'intermédiaire de la vis 1 sur la structure portante 7. Généralement, ladite structure est déjà recouverte de panneaux d'isolation thermique 6 ou d'autres matériaux appropriés. Les vis 1 ont une longueur et une résistance appropriées pour supporter les secousses dues à l'action du vent qui tend à soulever la membrane étanche suite aux effets de dépression locales créer sur les toitures.

La membrane étanche 8 (figure 2), placée au-dessus du capuchon 2 et la semelle 5, est reliée de manière stable et solide, en 9, à ladite semelle 5 grâce à un outillage 10 de thermosoudage (ou de vulcanisation) de la zone annulaire S avec la surface inférieure correspondante de la membrane 8.

Le capuchon 2 est un élément important pour une fixation solide et durable de la membrane 8.

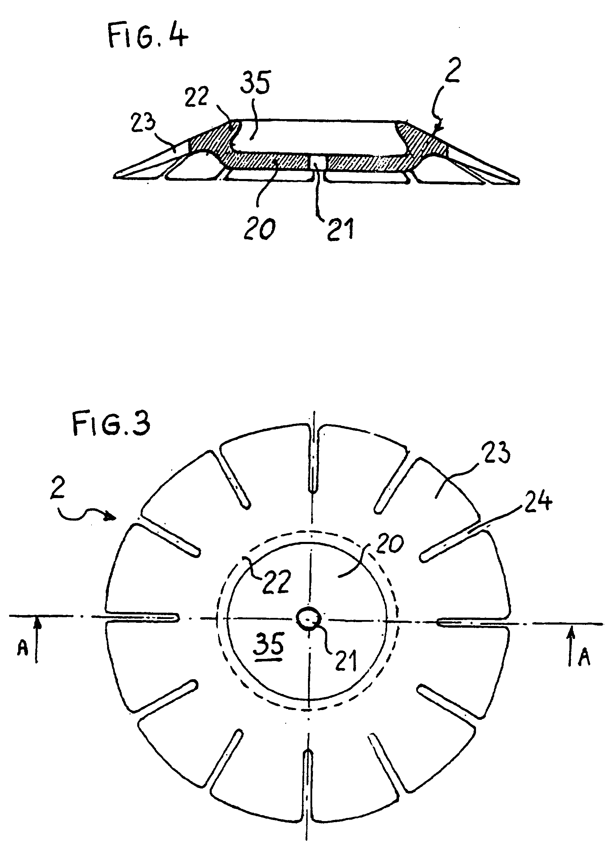

Comme montré aux figures 3 et 4, le capuchon 2 conforme à l'invention, est formé par un disque central 20 pourvu d'une ouverture 21 au centre pour le passage de la vis 1.

Le disque central 20 est relié, par sa périphérie, à un rebord supérieur 22 rentrant légèrement vers l'intérieur formant ainsi une cavité creuse 35, le rebord supérieur s'étend en pente vers l'extérieur par une partie en forme de disque à ailettes 23 qui descend jusqu'à un niveau qui se situe en dessous du niveau inférieur du disque central 20.

La partie en forme d'ailettes 23 est munie sur sa périphérie, d'encoches radiales 24 de façon à augmenter la flexibilité des extrémités des ailettes 23 en contact avec la semelle 5 en cas de soulèvements de la membrane 8.

Du fait que les extrémités des ailettes 23 s'étendent en deçà du niveau inférieur du disque central 20, la fixation ultérieure par la vis 1 sera soumise en permanence à une prétention maintenant la vis en place lors de vibrations.

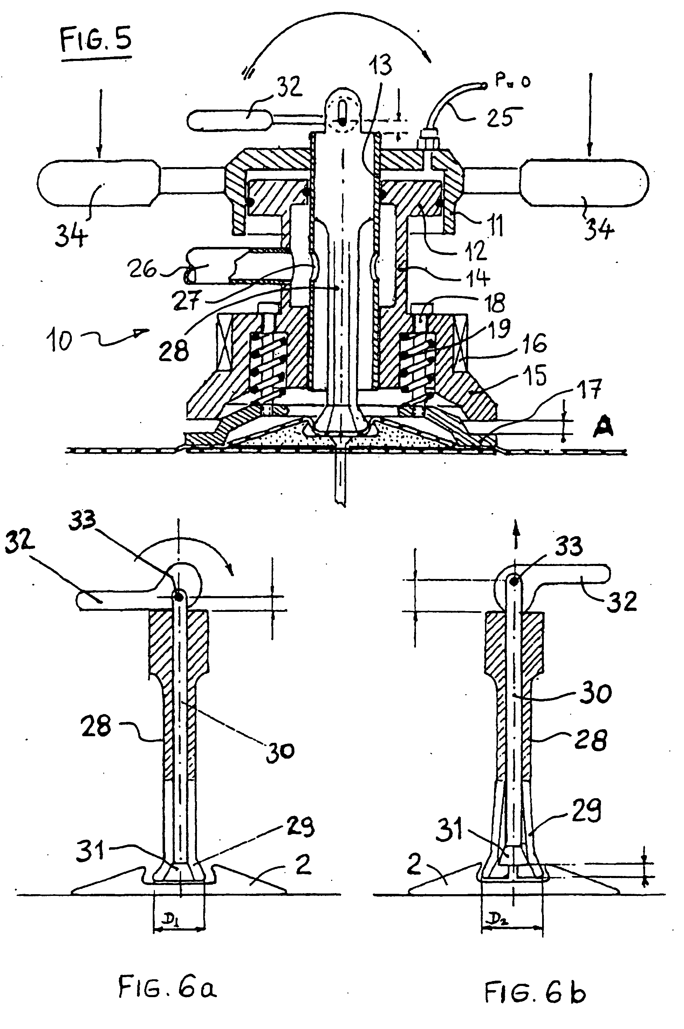

Les figures 5 à 8 montrent la configuration et le fonctionnement d'un outillage 10 de thermosoudure particulièrement adapté pour réaliser le procédé conforme à l'invention.

Cette outillage se compose d'un tube central 13 muni, à sa partie supérieure, d'un cylindre 11 qui est disposé de façon coaxiale et relié par sa partie supérieure au tube 13.

Autour du tube 13 et à l'intérieure du cylindre 11 peut se mouvoir un piston 12 qui est relié par l'intermédiaire d'un manchon 14 à un corps de chauffe 15. Le corps de chauffe 15 est munie d'une résistance 16 et porte une plaque de soudage 17 par l'intermédiaire de tiges de guidages 18. Autour des tiges de guidages 18 sont disposés des ressorts 19 sous l'action desquels la plaque de soudage 17 est normalement maintenue écartée (distance A) du corps de chauffe 15.

Dans la partie supérieure du cylindre 11, est prévue une entrée de fluide sous pression 25 sous l'action duquel le piston 12 peut être déplacé vers le bas à l'encontre de l'action des ressorts 19.

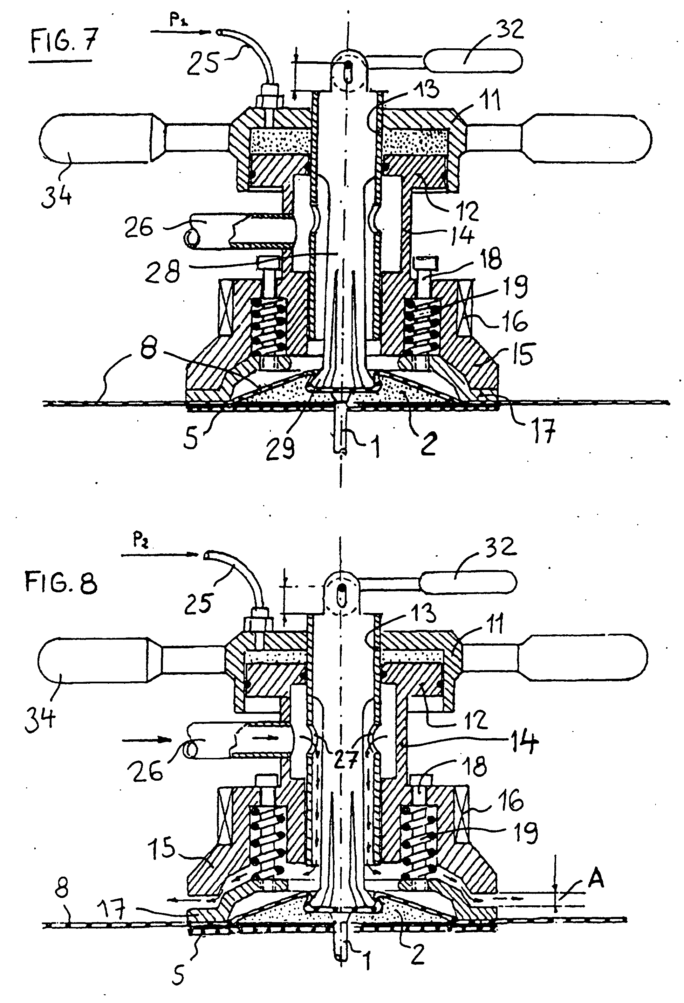

Le manchon 14 est munie d'une entrée d'air de refroidissement 26. Cet air de refroidissement abouti dans la partie creuse centrale du manchon 14 avant de passer par des ouvertures 27 prévues dans le tube central 13 à l'intérieure dudit tube pour être évacuer vers le bas au travers l'espace annulaire A entre le corps de chauffe 15 et la plaque de soudage 17 lorsqu'ils se trouvent en position écarté (voir figure 8).

Le corps de chauffe 15 peut être réalisé à l'aide d'une résistance électrique ou d'un système basé sur l'induction électromagnétique.

A l'intérieure du tube central 13 est prévu un mécanisme d'accrochage tel qu'une pince 28 dont la partie inférieure est munie de doigts élastiques 29 pouvant s'écarter sous l'action du déplacement d'une tige centrale 30 dont l'extrémité inférieure est munie d'une partie conique élargissante 31. Comme montré sur les figures 6a et 6b la tige central 30 est actionnée par un levier 32 relié à l'extrémité supérieure de la tige par un axe 33 disposé de façon excentrique par rapport à la position du levier 32.

En position de repos, les doigts 29 de la pince 28 sont refermés tel que montré sur les figures 5 et 6a. Dans cette position les doigts 29 ont un diamètre D1, inférieur au diamètre du rebord supérieur rentrant 22 du capuchon 2 et la pince 28 peut dès lors s'engager dans la cavité conique formée par cette partie 22 du capuchon.

Il est évident que l'actionnement des doigts 29 de la pince 28 peut être effectué par n'importe quel autre mécanisme, tel qu'un vérin pneumatique

Pour faciliter la manutention de l'outillage 10, le cylindre 11 peut être muni de poignées 34.

Le procédé de fixation selon l'invention est illustré aux figures 5 à 8 et se déroule comme suit :
- la membrane étanche 8 est posée sur les panneaux d'isolation 6 de la structure portante 7 ainsi que sur une série déterminée d'éléments de fixation comprenant chacun l'ensemble : vis 1, capuchon 2 et élément de liaison 5 composée de la semelle 3 et de la couche thermofusible 4;
- l'outillage 10 est posé sur le côté extérieur de la membrane à l'endroit d'un élément de fixation ou capuchon 2 comme montré à la figure 5; les doigts 29 de la pince 28, ainsi qu'une partie de la membrane 8, étant rentrés et enfoncés dans la cavité creuse 35 du capuchon 2.
- par cette mise en place, l'outillage 10 est automatiquement centré dans un plan horizontal sur l'élément de fixation 2 et la plaque de soudage 17 est positionné exactement sur la zone annulaire S de la semelle 3 avec la couche thermofusible 4 de l'élément de liaison 5;
- ensuite le levier 32 de la pince 28 est actionné afin d'écarter les doigts 29 à l'intérieur de la cavité creuse 35 du capuchon 2 et d'accrocher ainsi l'outillage 10 dans un plan vertical avec l'élément de fixation ou capuchon 2 ainsi que montré sur les figures 6b, 7 et 8;
- une pression P1, tel que provoqué par de l'air sous pression, est alors appliquée à l'entrée 25 entre le cylindre 11 et le piston 12; cette pression provoque la descente du piston 12, du corps de chauffe 15 et de la plaque 17 contre la surface de la membrane et ensuite, à l'encontre de l'action des ressorts 19 jusqu'à ce que le corps de chauffe 15 entre en contact avec la plaque de soudage 17;
- la résistance électrique 16 ayant été préalablement raccordé à une source d'énergie maintien le corps 15 à une température constante de 180-200°C qui est maintenant transmise à la plaque de soudage 17 sous une pression P1 déterminée (de préférence entre 0,15 et 0,2 MPa);
- la compression est maintenue jusqu'à ce que l'interface membrane 8/plaque de soudage 17 ait atteint une température de 140 à 160°C (détection par moyens de contrôle électroniques non illustrés;
- à partir du moment où la température de soudage présélectionnée a été atteinte, la durée de soudage est limitée par un temporisateur à environ 30 secondes (dépend des matériaux utilisés);
- une fois que la durée de soudage s'est écoulée, la pression dans le cylindre 11 est réduite jusqu'à une pression P2 (P2<P1) , qui correspond environ à la moitié de la pression existante P1; de cette façon la poussée du piston 12 devient inférieure à l'action des ressorts 19 et le corps chauffant 15 se soulève de la plaque de soudage 17 qui reste maintenue contre la surface de la membrane pour la pression résiduelle, en laissant entre eux une espace annulaire libre;
- à ce moment de l'air de refroidissement est injecté par l'entrée 26, parcourant un trajet à partir de l'espace intérieure du manchon 14 via les ouvertures 27 et l'espace entre le tube 13 et la pince 28 vers le bas pour s'échapper par l'espace annulaire A entre le corps de chauffe 15 et la plaque de soudage 17 évacuant ainsi la chaleur, essentiellement de la plaque de soudage 17;
- un circuit de contrôle électronique signale la fin du cycle de refroidissement lorsque la température présélectionnée (130- 140°C) est atteinte;
- enfin, la pression P2 est déchargée et le levier 32 est ramené dans sa position de début pour libérer les doigts 29 de la pince 28 et pour les ramener dans une position de repos désolidarisant l'outillage 10 du capuchon 2,
- l'outillage peut ensuite être enlevé de l'élément de fixation 2, 5, désormais pourvu d'une liaison mécanique avec la membrane 8, et posé sur un élément de fixation suivant en recommençant le cycle d'opérations décrit ci-dessus.

La fixation de la membrane 8 sur le support 7 est réalisée par l'intermédiaire de points répartis sur la surface selon des schémas et critères bien connus et qui ont déjà été longuement expérimentés.

Le nouveau capuchon 2, de par sa forme même, permet d'affiner une technique particulière de jonction qui garantit, entre la membrane 8 et les éléments de fixation, une union optimale et répétitive pour tous les éléments de fixation, quelle que soit la pente, sans effort manuel et sans les habituelles incertitudes liées à l'attention ou à l'expérience de l'opérateur/opératrice.

Ainsi, puisque le résultat final de la fixation ainsi réalisée ne dépend plus de l'habileté de l'opérateur/opératrice et puisque le procédé n'est pas influencé par les conditions atmosphériques, ledit procédé permet de diminuer le niveau d'incertitude quant à l'efficacité de la fixation. Ceci se traduit par un nombre inférieur de pièces à prévoir comme points de fixation et par une réduction du coefficient de sécurité de 1,5 à 1,1 avec un avantage économique certain.

L'union entre la membrane 8 et l'élément de liaison 5 est effectuée à l'aide de vulcanisation ou de thermosoudage en effectuant un cycle complet de chauffage sous pression suivi d'un cycle de refroidissement également sous pression, ceci seulement pour les liaisons thermo-soudées.

La pression est appliquée de l'extérieur et transmise à l'ensemble élément de liaison/membrane par l'intermédiaire de l'outillage conforme à l'invention qui est en mesure de pincer temporairement, puis de relâcher la tête du capuchon à travers la membrane étanche déformable de manière élastique qui a déjà été posée au-dessus des éléments de fixation.

Dans l'exemple de réalisation décrit, la pression de jonction sur les matériaux résulte, après le pincement du capuchon, de l'expansion du piston pneumatique 12. La compression se manifeste donc sous forme d'effort interne au système outillage/capuchon, et par conséquent, ne provoque pas la réaction des structures ou des matériaux se trouvant sous la membrane d'imperméabilisation (isolants, support, etc.). Ladite compression n'implique pas d'efforts de la part de l'opérateur/opératrice, dont l'intervention se limite à l'insertion de l'outillage en début de cycle et l'actionnement du levier d'accrochage 32. Cette opération indépendante entraîne une fiabilité du résultat final de la soudure et une uniformité des raccords de liaison, comme déjà décrit ci-dessus.

Les systèmes d'ancrage alternatifs, qui utilisent des plaques d'ancrage rigides avec des vis de fixation, ou éventuellement des plaques rigides associées à des éléments flexibles, mais forcément très rigides car généralement renforcés, n'offrent pas les caractéristique d'atténuation des efforts et des vibrations obtenues grâce à l'invention. Lesdits systèmes, qui proposent le raccord membrane/plaque métallique au moyen de systèmes connus de vulcanisation ou de thermosoudage, n'ont aucune action d'amortissement pour les vibrations et ne possèdent pas les caractéristiques permettant d'amortir les pics de contraintes. Toute l'énergie de l'action dynamique du vent se décharge directement sur la vis de fixation, ce qui entraîne facilement son desserrage.

L'élément de fixation selon l'invention possède une élasticité axiale conférée par sa forme spécifique. Sous l'effet des vis d'ancrage, la compression axiale, qui en résulte, assure un effort constant dans le temps sur les vis et empêche ainsi leur desserrage. En outre, le comportement de l'ensemble des éléments de liaison est amortissant pour les vibrations de fréquence élevée (> 2 Hz) transmises par la membrane au capuchon qui est solidaire de ladite membrane. En effet, les déformations qui, sous l'effet desdites vibrations, pourraient se manifester dans la zone d'appui circonférentielle du capuchon, sont de signe opposé et de valeur absolue inférieure à celles déjà subies par la pièce de fixation grâce au jeu de la précharge dans le système d'ancrage. Le capuchon ne se soulève pas de son appui et protège la vis de toute exposition aux vibrations du vent.

Ledit capuchon peut être produit par moulage ou par estampage dans un matériau thermoplastique ou thermodurcissant tel que, par exemple, du Nylon, de l'ABS, du polyéthylène, du polypropylène ou du CPV; mais il peut également être en caoutchouc de type chloroprène, EPDM ou, par exemple, en butylcaoutchouc, afin d'augmenter l'effet d'amortissement grâce à l'hystérésis de ce matériau

Ledit capuchon peut également être en tôle d'acier inoxydable avec des nervures radiales qui confèrent à la forme une élasticité importante; il peut également être en tôle d'acier inoxydable avec des pétales radiaux.

Toutes les formes mentionnées ont, dans tous les cas, au repos, une base de forme concave qui confère à l'élément sa compressibilité axiale destinée à assurer la précharge voulue dans le système d'ancrage.

L'union entre les éléments membrane/semelle permet la coopération mécanique entre eux et active l'effet amortissant du capuchon élastique.

Grâce au présent système de fixation, tous les problèmes de déchirement ou de dérive de la membrane par rapport aux points d'ancrage sont éliminés, puisque les capuchons, une fois le travail terminé, sont comme encapsulés dans la membrane grâce aux soudures périphériques des éléments de liaison.

### LEGENDES :

1. vis
2. capuchon
3. semelle
4. couche en matière thermofusible
5. élément de liaison
6. panneau d'isolation
7. structure portante
8. membrane
9. liaison mécanique
10.outillage de thermosoudure
11. cylindre
12. piston
13. tube central
14. manchon
15. corps de chauffe
16. résistance
17: plaque de soudage
18. tige de guidage
19. ressorts
20. disque central capuchon
21. ouverture
22. rebord supérieure
23. ailette
24. encoches radiales
25. entrée air sous pression
26. entrée air de refroidissement
27. ouverture tube
28. pince
29. doigt
30. tige centrale
31. partie conique
32. levier
33. axe excentrique
34. poignées
35. cavité creuse du capuchon

## Revendications

1. Procédé de fixation non perforant de membranes étanches à une structure sous-jacente (6, 7) selon lequel la membrane (8) est posée sur la structure munie d'au moins un élément de fixation (2, 5) fixé sur la structure à l'aide de moyens de fixation (1) et selon lequel un outillage de soudage est posé par sa plaque de soudage (17) sur une zone (S) de liaison entre un élément de fixation (2, 5) et la membrane (8)
**caractérisé en ce qu'**on effectue les étapes suivants :
• on solidarise l'outillage de soudage (10) avec au moins un élément de fixation (2, 5) et **en ce que**, suite à cette solidarisation, la plaque de soudage (17) de l'outillage (10) est correctement positionné par rapport à la zone (S) à souder;
• on applique une force (pression P1) prédéterminée sur la plaque de soudage (17);
• la zone (S) à souder est ensuite chauffée à une température permettant la fusion des couches de contact entre l'élément de fixation et la membrane, tout en maintenant ladite force;
• après une durée de chauffe prédéterminée la force sur la plaque de soudage (pression P1) est réduite (pression P2) et de l'air de refroidissement est projeté sur la plaque de soudage (17) jusqu'à ce que cette plaque ait atteint une température prédéterminée de solidarisation entre les couches de contact;
• l'outillage (10) est désolidarisé et enlevé de l'élément de fixation (2,5)

2. Procédé selon la revendication 1, **caractérisé en ce que** pendant le cycle de chauffage et de fusion, la pression spécifique dans la zone (S) à souder et correspondant à la pression (P1) appliquée, se situe de préférence entre 0,1 et 0,15 Mpa.

3. Procédé selon la revendication 1, **caractérisé en ce que** pendant le cycle de refroidissement et de solidarisation, la pression spécifique dans la zone (S) de soudure correspondant à la pression (P2), se situe de préférence entre 0,07 et 0,09 Mpa.

4. Procédé selon la revendication 1, **caractérisé en ce que** la température de soudage se situe de préférence entre 140 et 160°C.

5. Procédé selon la revendication 1, **caractérisé en ce que** la température de la plaque de soudage (17) après refroidissement se situe de préférence entre 130 et 140°C.

6. Procédé selon la revendication 1, **caractérisé en ce que** l'élément de fixation (2, 5) est composé d'un capuchon (2) qui est fixé à l'aide d'un moyen de fixation (1) à la structure sous-jacente (6, 7) et d'une semelle flexible (5) en forme de rondelle qui dépasse le bord du capuchon (2) pour former une zone annulaire (S).

7. Procédé selon la revendication 6, **caractérisé en ce que** la zone supérieure de la zone annulaire (S) est relié par sondage au bord inférieure de la membrane (8).

8. Procédé selon la revendication 6, **caractérisé en ce que** la surface supérieure de la semelle (5) est recouverte d'une couche en matière thermofusible.

9. Outillage de thermosoudure utilisé pour la mise en oeuvre du procédé selon la revendication 1, comprenant un élément de chauffe (16) et une plaque de soudage (17) prévue pour être appliquée du côté extérieure de la membrane étanche (8) et sur la zone de soudage (S) située autour d'un élément de fixation (2, 5), **caractérisé en ce que** la plaque de soudage (17) est portée par un corps de chauffe (15) incorporant l'élément de chauffe (16) et **en ce que** ledit corps de chauffe (15) peut se déplacer autour d'un tube central (13) muni d'un mécanisme d'accrochage (28) avec l'élément de fixation (2).

10. Outillage selon la revendication 9, **caractérisé en ce que** la plaque de soudage (17) est portée par le corps de chauffe (15) par l'intermédiaire de tiges de guidages (18) autour desquelles sont disposés des ressorts (19) sous l'action desquels la plaque de soudage (17) est normalement maintenue écartée du corps de chauffe (15) par une espace annulaire (a).

11. Outillage selon la revendication 9, **caractérisé en ce que** le corps de chauffe (15) est relié, du côté opposé de la plaque de soudage (17), à un piston (12) par l'intermédiaire d'un manchon (14) et **en ce que** le piston (12) peut se déplacer à l'intérieur d'un cylindre (11) solidaire de la partie supérieure du tube central (13).

12. Outillage selon la revendication **11, caractérisé en ce que** le cylindre (11) est relié par son extrémité à une entrée d'air (25) à deux niveaux de pression (P1, P2).

13. Outillage selon la revendication **11, caractérisé en ce que** le manchon (14) est relié à une entrée d'air de refroidissement (26) et **en ce que** cette air de refroidissement est capable de s'échapper par l'espace annulaire (a) entre le corps de chauffe (15) et la plaque de soudage (17).

14. Outillage selon la revendication 9, **caractérisé en ce que** le mécanisme d'accrochage solidaire du tube central (13) est réalisé sous forme de pince (28) dont la partie inférieure est munie de doigts élastiques (29) pouvant s'écarter sous l'action du déplacement d'une tige centrale (30) dont l'extrémité inférieure est munie d'une partie conique élargissante (31) et **en ce que** la tige (30) est actionnée axialement par un levier (32) relié à l'extrémité supérieure de la tige (30) par un axe (33) disposé de façon excentrique par rapport à la position du levier (32).

15. Outillage selon la revendication **14, caractérisé en ce que**, en position d'accrochage, les doigts élastiques (29) de la pince (28) coopèrent avec la cavité creuse (35) du capuchon (2).

## Patentansprüche

1. Verfahren zur nicht perforierenden Befestigung von undurchlässigen Membranen an einer darunter liegenden Struktur (6, 7), wobei die Membran (8) an der Struktur angeordnet wird, welche mit wenigstens einem an der Struktur mittels Befestigungsmitteln (1) befestigten Befestigungselement (2, 5) versehen ist, und wobei ein Schweißwerkzeug mit seiner Schweißplatte (17) auf einem Verbindungsbereich (S) zwischen einem Befestigungselement (2, 5) und der Membran (8) angeordnet wird, **dadurch gekennzeichnet, dass** die folgenden Schritte ausgeführt werden:
* das Schweißwerkzeug (10) wird mit wenigstens einem Befestigungselement (2, 5) verbunden, und nach dieser Verbindung wird die Schweißplatte (17) des Werkzeugs (10) bezüglich des zu schweißenden Bereichs (S) korrekt positioniert;
* eine vorbestimmte Kraft (Druck P1) wird auf die Schweißplatte (17) ausgeübt;
* der zu schweißende Bereich (S) wird anschließend auf eine Temperatur erwärmt, die die Fusion der sich berührenden Schichten des Befestigungselements und der Membran ermöglicht, wobei die Kraft aufrechterhalten wird;
* nach einer vorbestimmten Erwärmungsdauer wird die auf die Schweißplatte ausgeübte Kraft (Druck P1) verringert (Druck P2), und Kühlungsluft wird auf die Schweißplatte (17) ausgestoßen, bis diese Platte eine vorbestimmte Temperatur der Verbindung zwischen den beiden Schichten erreicht hat;
* das Werkzeug (10) wird gelöst und von dem Befestigungselement (2, 5) entfernt.

2. Verfahren nach Anspruch 1, **dadurch gekennzeichnet, dass** während des Erwärmungs- und Fusionszyklus der dem ausgeübten Druck (P1) entsprechende spezifische Druck in dem zu schweißenden Bereich (S) vorzugsweise zwischen 0,1 und 0,15 MPa liegt.

3. Verfahren nach Anspruch 1, **dadurch gekennzeichnet, dass** während des Kühl- und Verfestigungszyklus der dem ausgeübten Druck (P2) entsprechende spezifische Druck in dem zu schweißenden Bereich (S) vorzugsweise zwischen 0,07 und 0,09 MPa liegt.

4. Verfahren nach Anspruch 1, **dadurch gekennzeichnet, dass** die Schweißtemperatur vorzugsweise zwischen 140 °C und 160 °C liegt.

5. Verfahren nach Anspruch 1, **dadurch gekennzeichnet, dass** die Temperatur der Schweißplatte (17) nach dem Abkühlen vorzugsweise zwischen 130 °C und 140 °C liegt.

6. Verfahren nach Anspruch 1, **dadurch gekennzeichnet, dass** das Befestigungselement (2, 5) aus einer Kappe (2), die mittels eines Befestigungsmittels (1) an der darunter liegenden Struktur (6, 7) befestigt wird, und aus einer flexiblen Auflage (5) in Form einer Scheibe, die über den Rand der Kappe (2) hinaus reicht, um einen ringförmigen Bereich (S) zu bilden, gebildet ist.

7. Verfahren nach Anspruch 6, **dadurch gekennzeichnet, dass** der obere Bereich des ringförmigen Bereichs (S) durch Schweißen mit dem unteren Rand der Membran (8) verbunden wird.

8. Verfahren nach Anspruch 6, **dadurch gekennzeichnet, dass** die obere Fläche der Auflage (5) mit einer Schicht aus schmelzbarem Material bedeckt ist.

9. Werkzeug zum Warmverschweißen, das zum Durchführen des Verfahrens nach Anspruch 1 verwendet wird, umfassend ein Heizelement (16) und eine Schweißplatte (17), vorgesehen, um an der Außenseite der undurchlässigen Membran (8) und an dem um ein Befestigungselement (2, 5) gebildeten Schweißbereich (S) angewendet zu werden, **dadurch gekennzeichnet, dass** die Schweißplatte (17) von einem Heizkörper (15) getragen ist, welcher das Heizelement (16) umfasst, und dadurch, dass sich der Heizkörper (15) um ein zentrales Rohr (13) bewegen kann, welches mit einem Mechanismus zum Eingreifen (28) mit dem Befestigungselement (2) versehen ist.

10. Werkzeug nach Anspruch 9, **dadurch gekennzeichnet, dass** die Schweißplatte (17) von dem Heizkörper (15) mittels Führungsstangen (18) gehalten ist, um die herum Fedem (19) angeordnet sind, unter deren Einfluss die Schweißplatte (17) normalerweise mit ringförmigem Abstand (a) von dem Heizkörper (15) entfernt gehalten ist.

11. Werkzeug nach Anspruch 9, **dadurch gekennzeichnet, dass** der Heizkörper (15) an der der Schweißplatte (17) entgegengesetzten Seite mittels einer Muffe (14) mit einem Kolben (12) verbunden ist, und dass sich der Kolben (12) im Inneren eines mit dem oberen Teil des zentralen Rohrs (13) verbundenen Zylinders (11) bewegen kann.

12. Werkzeug nach Anspruch 11, **dadurch gekennzeichnet, dass** der Zylinder (11) an seinem Ende mit einem Lufteinlass (25) mit zwei Druckniveaus (P1, P2) verbunden ist.

13. Werkzeug nach Anspruch 11, **dadurch gekennzeichnet, dass** die Muffe (14) mit einem Einlass für Kühlungsluft (26) verbunden ist, und dass diese Kühlungsluft durch den ringförmigen Raum (a) zwischen dem Heizkörper (15) und der Schweißplatte (17) entweichen kann.

14. Werkzeug nach Anspruch 9, **dadurch gekennzeichnet, dass** der mit dem zentralen Rohr (13) verbundene Eingreifmechanismus in Form einer Klemme (28) gebildet ist, deren unterer Teil elastische Finger (29) aufweist, welche sich unter der Einwirkung der Bewegung einer zentralen Stange (30), deren unteres Ende mit einem sich konisch erweiternden Abschnitt (31) versehen ist, auseinander spreizen können, und dadurch, dass die Stange (30) durch einen Hebel (32) axial in Bewegung gesetzt wird, welcher mit dem oberen Ende der Stange (30) durch eine bezüglich der Stellung des Hebels (32) exzentrisch angeordnete Welle (33) verbunden ist.

15. Werkzeug nach Anspruch 14, **dadurch gekennzeichnet, dass** die elastischen Finger (29) der Klemme (28) in Eingreifstellung mit dem Hohlraum (35) der Kappe (2) zusammenarbeiten.

## Claims

1. Non-piercing fastening method of sealing membranes to a substructure (6, 7), according to which the membrane (8) is placed on the structure fitted with at least one fastening element (2, 5) fastened to the structure using means of fastening (1) and according to which a sealing tool is placed by its sealing plate (17) on an area (S) connecting a fastening element (2, 5) and the membrane (8)
**characterised by** the fact that the following stages are carried out:
• the sealing tool (10) is joined to at least one fastening element (2, 5) and following this the sealing plate (17) of the tool (10) is positioned correctly in relation to the area (S) to be sealed;
• a predetermined force (pressure P1) is applied to the sealing plate (17);
• the area (S) to be sealed is then heated to a temperature allowing the contact layers between the fastening element and membrane to melt, whilst maintaining the said force; é
• after a predetermined heating time the force on the sealing plate (pressure P1) is reduced (pressure P2) and cooling air is projected over the sealing plate (17) until this plate has reached a predetermined temperature ensuring fixing between the contact layers;
• the tool (10) is detached and removed from the fastening element (2, 5)

2. Method according to claim 1, **characterised by** the fact that during the heating and melting cycle, the specific pressure in the area (S) to be sealed, corresponding to the pressure (P1) applied, is preferably between 0.1 and 0.15 Mpa.

3. Method according to claim 1, **characterised by** the fact that during the cooling and fixing cycle the specific pressure in the area (S) to be sealed, corresponding to the pressure (P2), is preferably between 0.07 and 0.09 Mpa.

4. Method according to claim 1, **characterised by** the fact that the sealing temperature is preferably between 140 and 160E C.

5. Method according to claim 1, **characterised by** the fact that the temperature of the sealing plate (17) after cooling is preferably between 130 and 140E C.

6. Method according to claim 1, **characterised by** the fact that the fastening element (2, 5) is made up of a cap (2) which is fastened to the substructure (6, 7) using means of fastening (1) and a flexible sole (5) in the form of a disc which overhangs the edge of the cap (2) to form an annular space (S).

7. Method according to claim 6, **characterised by** the fact that the upper area of the annular space (S) is connected to the lower edge of the membrane (8) by sealing.

8. Method according to claim 6, **characterised by** the fact that the upper surface of the sole (5) is covered by a layer of heat fusible material.

9. Heat sealing tool used to put the method according to claim 1 into practise, comprising a heating element (16) and a sealing plate (17) provided to be applied to the outside edge of the sealed membrane (8) and on the sealing area (S) situated around a fastening element (2, 5), **characterised by** the fact that the sealing plate (17) is carried by a heating body (15) incorporating the heating element (16) and the said heating body (15) may be displaced around a central tube (13) fitted with a coupling mechanism (28) with the fastening element (2).

10. Tool according to claim 9, **characterised by** the fact that the sealing plate (17) is carried by the heating body (15) by means of guide rods (18) around which springs (19) are arranged, the action of which normally keeps the sealing plate (17) away from the heating body (15) by an annular space (a).

11. Tool according to claim 9, **characterised by** the fact that the heating body (15) is connected to a piston (12) on the opposite side of the sealing plate (17) by means of a sleeve (14) and that the piston (12) may be displaced inside a cylinder (11) which is integral with the top part of the central tube (13).

12. Tool according to claim 11, **characterised by** the fact that the cylinder (11) is connected at the end to an air inlet (25) at two pressure levels (P1, P2).

13. Tool according to claim 11, **characterised by** the fact that the sleeve (14) is connected to a cooling air inlet (26) and this cooling air can escape through the annular space (a) between the heating body (15) and the sealing plate (17).

14. Tool according to claim 9, **characterised by** the fact that the coupling mechanism which is integral to the central tube (13) is made in the form of a pincer (28) the lower part of which is equipped with flexible fingers (29) which may be withdrawn by the displacement action of a central rod (30), the lower end of which is equipped with a widening conical part (31) and the rod (30) is axially operated by a lever (32) connected to the upper end of the rod (30) by a shaft (33) which is eccentric in relation to the position of the lever (32).

15. Tool according to claim 14, **characterised by** the fact that the flexible fingers (29) of the pincer (28) work together with the hollow cavity (35) of the cap (2) in a coupling position.
